# EUROPÄISCHE PATENTANMELDUNG

(11) **EP 1 933 248 A1**
(43) Veröffentlichungstag der Anmeldung: **18.06.2008**
(21) Anmeldenummer: 06025684.9
(22) Anmeldetag: 12.12.2006
(51) Int. Cl.: G06F 21/00

(54) **Verfahren zur sicheren Datenverarbeitung auf einem Computersystem**

(71) Anmelder: secunet Security Networks Aktiengesellschaft, 45128 Essen (DE)
(72) Erfinder: Besch, Matthias, Dr., 81667 München (DE); Bihr, Heiko, Dipl. Inf., 46147 Oberhausen (DE); Hellrung, Andreas, Dipl. Inf., 45139 Essen (DE)
(74) Vertreter: Rohmann, Michael

(57) **Zusammenfassung**

Die Erfindung betrifft ein Verfahren zur sicheren Datenverarbeitung auf einem Computersystem mit einem für einen Nutzer nicht sichtbaren, über- oder nebengeordnetem Sicherheitsbetriebssystem. Das Sicherheitsbetriebssystem stellt als Computeranwendung eine virtuelle Maschine bereit, auf der ein für den Benutzer sichtbares und benutzbares Nutzerbetriebssystem ausführbar ist und die zumindest einen virtuellen Massenspeicher mit einem Dateisystem des Nutzerbetriebssystems aufweist oder das Sicherheitsbetriebssystem ist in einer ersten virtuellen Maschine gekapselt und das für den Benutzer sichtbare und benutzbare und mit zumindest einem virtuellen Massenspeicher mit einem Dateisystem ausgestattete Nutzerbetriebssystem wird in einer zweiten virtuellen Maschine ausgeführt. Das Sicherheitsbetriebssystem ist aus dem Nutzerbetriebssystem durch den Benutzer oder eine Computerprogrammanwendung, insbesondere eine schadhafte Datei nicht manipulierbar. Das Dateisystem des Nutzerbetriebssystems wird eingelesen und einem auf dem Sicherheitsbetriebssystem ausgeführten Analyseprozess zugeführt. Ein Lesezugriff des Nutzerbetriebssystems auf einen Datenblock in dem virtuellen Massenspeicher wird abgefangen und an den Analyseprozess übergeben, der den Datenblock einer Datei zuordnet und sämtliche zu der Datei gehörenden Datenblöcke ermittelt. Der Analyseprozess steuert einen in dem Sicherheitsbetriebssystem ausgeführten Prüfprozess zur Erkennung von schadhaften Dateien.

## Beschreibung

Die Erfindung betrifft ein Verfahren zur sicheren Datenverarbeitung auf einem Computersystem. Computersysteme, die mit den bekannten Nutzerbetriebssystemen betrieben werden, werden in stark zunehmendem Maße von Schadprogrammen angegriffen. Schadprogramme, wie Computerviren, Würmer und Trojaner nisten sich zumeist unbemerkt von dem Benutzer in dem Betriebssystem ein und manipulieren dieses. Je nach Art des Schadprogrammes können beispielsweise geheime Daten ausspioniert und Dateien zerstört werden. Die Schadprogramme können dabei über E-Mail, Daten-Download oder externe Massenspeichergeräte, wie beispielsweise einen USB-Stick, auf das Computersystem gelangen. Die Schadprogramme erzeugen dabei auf dem angegriffenen Rechner zusätzliche Dateien oder hängen sich als zusätzlicher Programmcode an bereits vorhandene Dateien an. Bei einem Aufruf einer derart veränderten Datei wird dann das Schadprogramm aktiv und kann sich beispielsweise durch die Beschädigung weiterer Dateien reproduzieren. Als Gegenmaßnahmen werden auf den Computersystemen Antivirus-Programme installiert. Diese Schutzsoftware kann aber von technisch versierten Nutzern, vor allem aber von geeigneten Schadprogrammen selbst ausgeschaltet und manipuliert oder umgangen werden, so dass der Rechner schutzlos Angriffen durch bzw. über die Schadprogramme ausgesetzt ist.

Aus der Praxis ist bekannt, auf einem übergeordneten Betriebssystem eine virtuelle Maschine bereitzustellen, auf der ein Nutzerbetriebssystem als Computerprogrammanwendung ausgeführt wird. Während das übergeordnete Betriebssystem dadurch geschützt werden kann, dass das Nutzerbetriebssystem nicht auf geschützte Speicherbereiche zugreifen kann, ist der Schutz des Nutzerbetriebssystems selbst durch herkömmliche Antiviren-Programme weiterhin unzureichend.

Aus der Druckschrift EP 880 743 B1 ist darüber hinaus bekannt, eine virtuelle Maschine zur Reparatur einer Computerdatei, die mit einem Virus infiziert ist, als gekapselte Computerprogrammanwendung innerhalb eines Nutzerbetriebssystems einzusetzen. Auf der virtuellen Maschine wird die mit einem Virus infizierte Computerdatei ausgeführt und der Virus dadurch aktiviert. Durch die für das Nutzerbetriebssystem gefahrlose Aktivierung des Virus kann dieser entschlüsselt und nachfolgend von der Wirtsdatei entfernt werden.

Der Erfindung liegt die Aufgabe zugrunde, ein Verfahren anzugeben, welches bei der Datenverarbeitung auf einem Computersystem mit einem Nutzerbetriebssystem die Sicherheit gegen einen Angriff von Schadprogrammen erhöht.

Lösung der Aufgabe ist erfindungsgemäß ein Verfahren zur sicheren Datenverarbeitung auf einem Computersystem mit einem für einen Benutzer nicht sichtbaren, über- oder nebengeordneten Sicherheitsbetriebssystem,
wobei das Sicherheitsbetriebssystem als Computerprogrammanwendung eine virtuelle Maschine (VM) mit virtueller Computerhardware bereit stellt, auf der ein für den Benutzer sichtbares und benutzbares Nutzerbetriebssystem ausführbar ist und die zumindest einen virtuellen Massenspeicher mit einem Dateisystem des Nutzerbetriebssystems aufweist oder wobei das Sicherheitsbetriebssystem gekapselt in einer ersten virtuellen Maschine und das für den Benutzer sichtbare und benutzbare und mit zumindest einem virtuellen Massenspeicher mit einem Dateisystem ausgestattete Nutzerbetriebssystem in einer zweiten virtuellen Maschine ausgeführt wird,
wobei das Sicherheitsbetriebssystem aus dem Nutzerbetriebssystem durch den Benutzer oder eine Computerprogrammanwendung, insbesondere einer schadhaften Datei, nicht manipulierbar ist,
wobei das Dateisystem des Nutzerbetriebssystems eingelesen und einem auf dem Sicherheitsbetriebssystem ausgeführten Analyseprozess bereit gestellt wird,
wobei ein Lesezugriff des Nutzerbetriebssystems auf einen Datenblock in dem virtuellen Massenspeicher abgefangen und an den Analyseprozess übergeben wird, der den Datenblock einer Datei zuordnet und sämtliche zu der Datei gehörenden Datenblöcke ermittelt und
wobei der Analyseprozess einem in dem Sicherheitsbetriebssystem ausgeführten Prüfprozess (Scan-Engine) zur Erkennung von schadhaften Dateien steuert.

Schadhafte Datei meint hier und nachfolgend ein Schadprogramm (Malware) und/oder eine von einem Schadprogramm modifizierte Datei und/oder eine von einem Schadprogramm erzeugte Datei. - Bezüglich der Ausführungsform mit der zweiten virtuellen Maschine geht die Erfindung davon aus, dass neue Technologien es auch erlauben, das Sicherheitsbetriebssystem inklusive des Antivirus-Dienstes selbst ebenfalls in eine zweite virtuelle Maschine auszulagern und von dort aus auf die virtuelle Festplatte des Nutzerbetriebssystems in der ersten virtuellen Maschine zuzugreifen.

Erfindungsgemäß sind der Analyseprozess und der Prüfprozess als Komponenten eines Antivirus-Systems aus dem Nutzerbetriebssystem in ein separates von dem Nutzerbetriebssystem nicht sichtbares und nicht zugreifbares Sicherheitsbetriebssystem (Sicherheitsschale) ausgelagert. Das Nutzerbetriebssystem kann dabei, wie gewohnt, bedient werden. Die Auswahl des Nutzerbetriebssystems und des Sicherheitsbetriebssystems ist dabei im Rahmen der Erfindung nicht eingeschränkt. Als Nutzerbetriebssystem sind beispielsweise die weit verbreiteten und den Nutzern üblicherweise vertrauten Windows®-Betriebssysteme geeignet, wobei durch das erfindungsgemäße Verfahren über die bereits in den Nutzerbetriebssystemen implementierten Sicherheitseinrichtungen zum Schutz gegen Schadprogramme bzw. schadhafte Dateien hinaus eine sehr hohe Manipulationssicherheit gewährleistet wird. Beim Systemstart wird die Sicherheitsschale vor dem Nutzerbetriebssystem gestartet und anschließend wird das Nutzerbetriebssystem wie gewohnt hochgefahren,
wobei jedoch erfindungsgemäß der Analyseprozess, der Prüfprozess und weitere optional vorgesehene Sicherheitsdienste verborgen und manipulationssicher in dem Sicherheitsbetriebssystem ausgeführt werden. Durch die Ausführung des Nutzerbetriebssystems auf einer virtuellen Maschine wird zusätzlich die Pflege mehrerer Nutzerbetriebssysteme in einer typischerweise heterogenen Unternehmensinfrastruktur homogenisiert und deutlich vereinfacht. Als Sicherheitsbetriebssystem ist insbesondere ein Unix- oder Linux-Betriebssystem geeignet, da diese entsprechend der jeweiligen Erfordernisse konfiguriert werden können, aus sicherheitstechnischer Sicht wenig Schwachstellen aufweisen und gut minimalisiert und gegen mögliche Angriffe von Schadsoftware gehärtet werden können.

Das erfindungsgemäße Verfahren zur sicheren Datenverarbeitung ist typischerweise Bestandteil einer umfangreichen, auf dem Sicherheitsbetriebssystem implementierten Sicherheitsumgebung. Weitere Dienste der Sicherheitsumgebung können beispielsweise Festplattenverschlüsselung, Back-up der virtuellen Festplatte, Zugangsbeschränkung für z. B. USB-Geräte und Beschränkung der Netzwerkkommunikation von und zum Nutzerbetriebssystem sein, die ebenfalls in dem Sicherheitsbetriebssystem manipulationsgeschützt ablaufen. Die Konfiguration dieser Dienste im Zusammenhang mit dem erfindungsgemäßen Verfahren erfolgt typischerweise über ein zentrales Managementsystem.

Im Rahmen einer bevorzugten Ausgestaltung des erfindungsgemäßen Verfahrens ist vorgesehen, dass eine Datenstruktur erstellt wird, welche die Sektoren des virtuellen Massenspeichers mit den darin liegenden Dateien verknüpft, so dass eine effiziente Zuordnung in der Richtung Sektor auf sämtliche Dateiblöcke einer Datei möglich ist. Zusätzlich wird für jede Datei eine Zustandsvariable vorgesehen. Durch die Verknüpfung der Dateien mit einer zugeordneten Zustandsvariablen kann vermieden werden, dass bei einem Lesezugriff des Nutzerbetriebssystems auf einen Datenblock in dem virtuellen Massenspeicher stets die angeforderte Datei auf eine mögliche Schadhaftigkeit überprüft werden muss. Mit Hilfe der Datenstruktur können Dateien in dem virtuellen Massenspeicher, die von dem Prüfprozess zur Erkennung von schadhaften Dateien überprüft und als unschädlich erkannt wurden, mit einem ersten Zustandswert (clean) und Dateien, die noch nicht überprüft oder die von dem Nutzerbetriebssystem verändert wurden, mit einem zweiten Zustandswert (dirty) versehen werden. Stellt der Analyseprozess einen Zugriff auf eine mit dem Zustandswert clean versehene Datei des virtuellen Massenspeichers fest, kann diese dem Nutzerbetriebssystem ohne eine erneute Prüfung bereitgestellt werden, wodurch im Vergleich zu einer undifferenzierten Überprüfung sämtlicher angeforderter Dateien ein deutlich erhöhter Datendurchsatz erreicht werden kann. Da lediglich Dateien, die mit dem Zustandswert dirty versehen sind, durch den Prüfprozess (Scan-Engine) auf mögliche Schadhaftigkeit überprüft werden müssen, kann die Effizienz des erfindungsgemäßen Verfahrens derart erhöht werden, dass lediglich geringe, für den Benutzer üblicherweise kaum wahrnehmbare zeitliche Verzögerungen auftreten. Insgesamt können durch den hohen Datendurchsatz auch Synchronisationsprobleme zwischen dem Nutzerbetriebssystem und dem Sicherheitsbetriebssystem weitgehend vermieden werden. - Es liegt im Rahmen der Erfindung, bei Lesezugriffen des Nutzerbetriebssystems die zu lesenden Daten auf schadhafte Dateien zu prüfen (On-Access Scan). Zweckmäßigerweise ist die Überprüfung von Datenströmen auf Viren im Rahmen des erfindungsgemäßen Verfahrens nicht vorgesehen.

Bei dem Auffinden einer Datei, die von dem Prüfprozess als schadhafte Datei identifiziert wird, ergeben sich verschiedene Handlungsoptionen, die abhängig von den Sicherheitsrichtlinien des Betreibers des Computersystems ausgewählt werden können. Zu berücksichtigen ist dabei, dass eine schadhafte, virusverseuchte Datei nicht ohne weiteres gelöscht werden kann, da in diesem Fall die Sicht des Nutzerbetriebssystems auf das Dateisystem nicht notwendigerweise mit den tatsächlichen, auf der virtuellen Festplatte vorhandenen Datenstrukturen übereinstimmt. Ein Löschen kann zu einer falschen Zuordnung der Datenblöcke zu einzelnen Dateien führen, wodurch es zu Störungen oder auch zu einem vollständigen Absturz des Nutzerbetriebssystems kommen kann. Im Rahmen des erfindungsgemäßen Verfahrens ist deshalb üblicherweise vorgesehen, dass schadhafte Dateien nicht gelöscht, sondern überschrieben und so unbrauchbar gemacht werden, wobei ein Lesezugriff des Nutzerbetriebssystems auf eine solche Datei verweigert wird. Im Rahmen der vorliegenden Erfindung kann auch vorgesehen sein, dass eine schadhafte Datei in einen gesicherten Speicherbereich des Sicherheitsbetriebssystems kopiert wird, so dass der Angriff durch das Schadprogramm dokumentiert und analysiert werden kann. Bei jedem Schreibzugriff des Nutzerbetriebssystems werden die betreffenden Sektoren protokolliert und dem Analyseprozess übergeben, wobei die entsprechende Datei mit dem Zustandswert dirty versehen wird.

Neben der beschriebenen Überwachung der Lesezugriffe (On-Access Scan) kann auch die virtuelle Festplatte oder deren Abbild, das durch das Sicherheitsbetriebssystem erstellt wurde, auf einen möglichen Befall mit Schadsoftware geprüft werden (Full Scan). Die virtuelle Festplatte kann entweder beim Herunterfahren des Nutzerbetriebssystems oder während des Betriebs des Nutzerbetriebssystems erzeugt werden. Eine vollständige Überprüfung der virtuellen Festplatte während des Betriebs des Nutzerbetriebssystems ist nachteilig, da die Datenstruktur aufgrund von Schreibzugriffen ständig einer Veränderung unterworfen ist und so Synchronisationsprobleme auftreten können. Zu berücksichtigen ist dabei, dass bei den bekannten Nutzerbetriebssystemen üblicherweise vorgesehen ist, Dateien, insbesondere Systemdateien, über längere Zeit in einem Cache-Speicher bereitzuhalten und nur in großen Zeitabständen auf den virtuellen Massenspeicher zu schreiben.

In einer vorteilhaften Weiterbildung des erfindungsgemäßen Verfahrens ist vorgesehen, dass im nichtaktiven Zustand des Nutzerbetriebssystems die virtuelle Festplatte von dem Prüfprozess überprüft wird. Vorteilhaft ist dabei, wenn ein Abbild bei dem Herunterfahren des Nutzerbetriebssystems erzeugt wird, da, sofern keine schadhaften Dateien gefunden wurden, bei einem Neustart des Nutzerbetriebssystems mit einer sehr großen Sicherheit davon ausgegangen werden kann, dass dann der virtuelle Massenspeicher frei von schadhaften Dateien ist. Nachteilig ist, dass das Nutzerbetriebssystem während der Überprüfung der virtuellen Festplatte nicht genutzt werden kann.

In einer alternativen Weiterbildung des erfindungsgemäßen Verfahrens ist vorgesehen, dass das Abbild der virtuellen Festplatte von dem Prüfprozess während des Betriebs des Nutzerbetriebssystems überprüft wird. Das Abbild kann beispielsweise bei einem vorherigen Herunterfahren des Nutzerbetriebssystems oder während des Betriebs des Nutzerbetriebssystems erstellt worden sein. Die Überprüfung des Abbildes erfolgt dann während des Betriebs des Nutzerbetriebssystems ohne wesentliche Beeinträchtigungen, insbesondere da auch die Überprüfung mit einer geringen Priorität in Bezug auf die Prozessorauslastung des Computersystems erfolgen kann, so dass eine Überprüfung lediglich erfolgt, wenn ausreichende Leistungsreserven zur Verfügung stehen. Sofern bei der Überprüfung festgestellt wird, dass das Abbild frei von schadhaften Dateien ist, kann das gesamte Abbild mit dem Zustandswert clean versehen werden. Insbesondere besteht auch die Möglichkeit, ein älteres Backup-Abbild bereitzuhalten, welches nach der Überprüfung des aktuellen Abbildes im Falle der Virenfreiheit gelöscht und durch das aktuelle Abbild ersetzt wird. Zu berücksichtigen ist dabei, dass insgesamt für das Backup-Abbild, das aktuelle Abbild und den virtuellen Massenspeicher, auf den das Nutzerbetriebssystem während der Überprüfung zugreift, ein sehr großer Speicherbedarf erforderlich ist.

Wird bei der Überprüfung der virtuellen Festplatte eine schadhafte Datei gefunden, kann zweckmäßigerweise ein Alarm ausgelöst werden, der dem Nutzer des Computersystems oder einen Administrator informiert. Zur Beseitigung der Schadsoftware kann ein älteres, sauberes Abbild der virtuellen Festplatte aufgespielt werden (restore), infizierte Dateien gelöscht oder in einen gesicherten Speicherbereich des Sicherheitsbetriebssystems kopiert werden, wobei das gesäuberte Abbild als sauberes Backup gespeichert wird. Zu beachten ist dabei, dass bei einem späteren Zurückspielen des Backups die entfernten Dateien zunächst nicht zur Verfügung stehen. Darüber hinaus kann auch die virtuelle Festplatte repariert werden, wodurch eine schadhafte Datei der virtuellen Festplatte oder eines Abbildes der virtuellen Festplatte durch eine entsprechend unbeschädigte Datei, insbesondere aus einem älteren Abbild oder aus einem Referenz-Abbild ersetzt wird. Alternativ kann eine schadhafte Datei der virtuellen Festplatte oder des Abbildes der virtuellen Festplatte zunächst durch Überschreiben unbrauchbar gemacht werden, wobei nachfolgend eine entsprechende unbeschädigte Datei manuell von dem Nutzer oder dem Administrator ergänzt wird.

Der Erfindung liegt die Erkenntnis zugrunde, dass es zweckmäßig ist, alle zentralen Sicherheitskomponenten aus dem Nutzerbetriebssystem (insbesondere Windows®) herauszunehmen und vor Manipulation geschützt in das Sicherheitsbetriebssystem auszulagern. Die Entkopplung zwischen Nutzer- und Sicherheitsbetriebssystem wird dabei durch eine Virtualisierungsschicht vorgenommen. Dies bedeutet, dass das Nutzerbetriebssystem statt auf realer Hardware auf einem virtuellen Computer aufsetzt und durch Funktionen des Sicherheitsbetriebssystems geschützt und überwacht ist. Das Sicherheitsbetriebssystem selbst wird zweckmäßigerweise durch umfangreiche Maßnahmen gegen nicht-autorisierten Zugriff geschützt. - Gegenstand der Erfindung ist insbesondere der sog. "virtuelle On-Access Scan". Statt des üblichen Desktop-Virenscanners unter Windows® wird die permanente Virenprüfung vor Schadsoftware geschützt und für den Endanwender unsichtbar im Sicherheitsbetriebssystem ausgeführt. Hierbei müssen virtuelle Maschine und Sicherheitskomponenten effizient zusammenarbeiten und miteinander synchronisiert werden. Es liegt im Rahmen der Erfindung, dass sich der Virenscanner nicht mehr als Windows®-Anwendung oberhalb des NTFS-Dateisystems, sondern geschützt als Anwendung des Sicherheitsbetriebssystems logisch zwischen NTFS-Dateisystem und virtueller Festplatte befindet. Um den Virenscan dennoch performant durchführen zu können, liefert die virtuelle Maschine Zusatzinformationen über betroffene Lesesektoren der virtuellen Festplatte. Es liegt fernerhin im Rahmen der Erfindung, dass mittels eines intelligenten Caching-Verfahrens die Datenblöcke ermittelt werden, die minimal notwendig sind, um einen Virenbefall einer Datei erkennen zu können. Bei positivem Befund sind verschiedene Strategien zum weiteren Umfang mit verseuchten Daten möglich.

Die Erfindung wird im Folgenden anhand eines Beispiels unter Verweis auf die Zeichnungen erläutert. Es zeigen:
- Fig. 1: die Gesamtarchitektur des Computersystems zur Durchführung des erfindungsgemäßen Verfahrens in einem schematischen Überblick,
- Fig. 2: die grundlegende Funktionsweise des erfindungsgemäßen Verfahrens,
- Fig. 3: die Architektur der erfindungsgemäßen Lesezugriff-Überwachung,
- Fig. 4: ein Blockschaltbild zur Durchführung des erfindungsgemäßen Verfahrens.

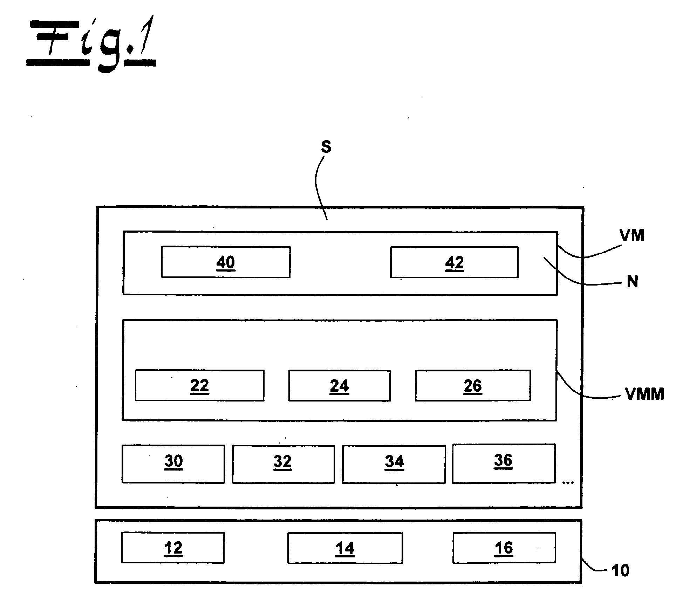

Fig. 1 zeigt die Gesamtarchitektur des Computersystems zur Durchführung des erfindungsgemäßen Verfahrens in einem Überblick. Das Computersystem weist eine Hardware 10 mit einem Netzwerkanschluss 12, einer USB-Schnittstelle 14 und einer seriellen Schnittstelle 16 auf. Auf dem Computersystem läuft ein Sicherheitsbetriebssystem S, welches als Computerprogrammanwendung eine virtuelle Maschine VM und über einen Virtual Machine Manager VMM virtuelle Schnittstellen 22, 24, 26 bereitstellt, wobei auf der virtuellen Maschine VM ein Nutzerbetriebssystem N, beispielsweise ein Windows®-Betriebssystem ausgeführt wird. Das Nutzerbetriebssystem N ist gekapselt, wobei das Sicherheitsbetriebssystem S aus dem Nutzerbetriebssystem N nicht manipulierbar ist. Auf dem Sicherheitsbetriebssystem S sind ein Management Agent 30 zur externen Steuerung des Sicherheitsbetriebssystems S und verschiedener Sicherheitsdienste implementiert. Die Sicherheitsdienste umfassen einen Analyseprozess 32, einen Prüfprozess 34 zur Erkennung von schadhaften Dateien und einen Dienst 36 zur Erstellung von Abbildern eines virtuellen Massenspeichers 38 der virtuellen Maschine VM.

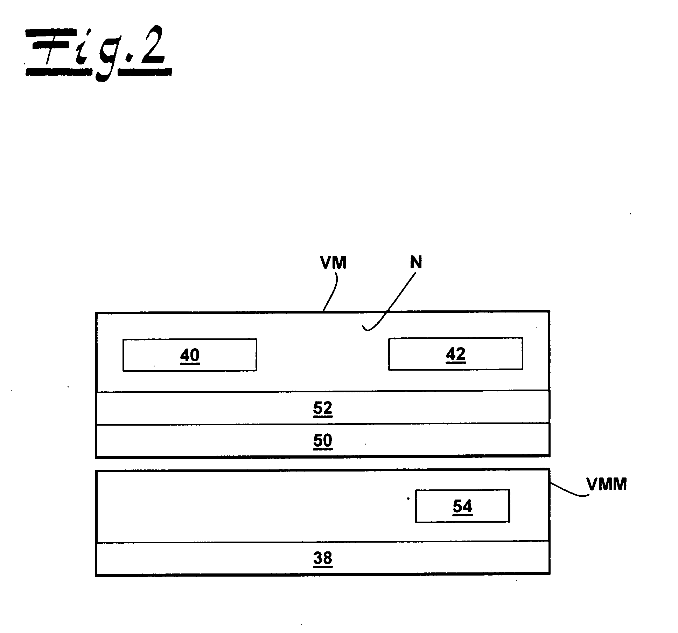

Fig. 2 zeigt eine Ausgestaltung des erfindungsgemäßen Verfahrens, wobei auf der virtuellen Maschine VM ein Windows®-Betriebssystem als Nutzerbetriebssystem N ausgeführt wird. In dem Nutzerbetriebssystem N können wie gewohnt verschiedene Datenverarbeitungsanwendungen 40, 42 von einem Benutzer ausgeführt werden. Lesezugriffe des Nutzerbetriebssystems N auf ein NTFS-Dateisystem 50 erfolgen über dessen Windows (R)-Kernel mit seinem NTFS-Dateisystemtreiber 52. Diese Lesezugriffe werden von dem Virtual Machine Manager VMM abgefangen und dem Analyseprozess 32 übergeben, der anhand von Sektorinformationen 54 des Nutzerbetriebssystems N die im Rahmen des Lesezugriffes angeforderten Datenblöcke einer Datei zuordnet und sämtliche zu der Datei gehörenden Datenblöcke ermittelt. Der Analyseprozess 32 steuert einen Prüfprozess 34 (Scan-Engine) zur Erkennung von schadhaften Dateien, wobei je nach den Erfordernissen eine Prüfung der angeforderten Datei veranlasst werden kann. Falls die angeforderte Datei virenfrei ist, ermöglicht der Virtual Machine Manager VMM einen Zugriff auf den virtuellen Massenspeicher 38.

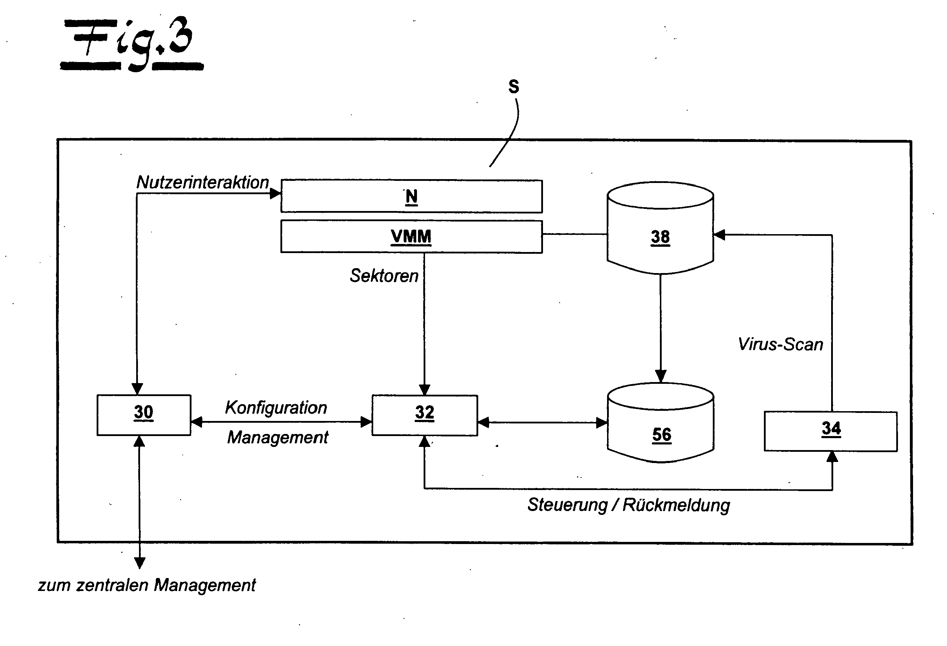

Fig. 3 zeigt die Architektur der Lesezugriff-Steuerung. Lesezugriffe des auf der virtuellen Maschine VM ausgeführten Nutzerbetriebssystems N werden von dem Virtual Machine Manager VMM abgefangen und an den Analyseprozess 32 übergeben. Anhand einer Datenstruktur 56, welche die Datenblöcke des virtuellen Massenspeichers 38 mit den darin liegenden Dateien verknüpft und welche die Dateien mit Zustandsvariablen verbinden, wird festgelegt, ob die angeforderte Datei durch den Prüfprozess 34 (Scan-Engine) zu überprüfen ist. In der Datenstruktur 56 ist für jede der Dateien der Zustandswert clean oder dirty abgelegt, wobei eine Datei, der der Wert clean zugeordnet ist, nicht durch den Prüfprozess 34 überprüft wird und wobei der Analyseprozess 32 über den Virtual Machine Manager VMM einen Lesezugriff gewährt. Wird eine Datei mit dem Zustandswert dirty versehen, wird diese von dem Prüfprozess 34 (Scan-Engine) überprüft. Falls die Datei unbeschädigt ist, wird der zugeordnete Zustandswert auf clean gesetzt und ein Lesezugriff gewährt. Ist die überprüfte Datei von einem Schadprogramm manipuliert, so wird diese überschrieben, wobei der Analyseprozess 32 den Lesezugriff des Nutzerbetriebssystems N verweigert.

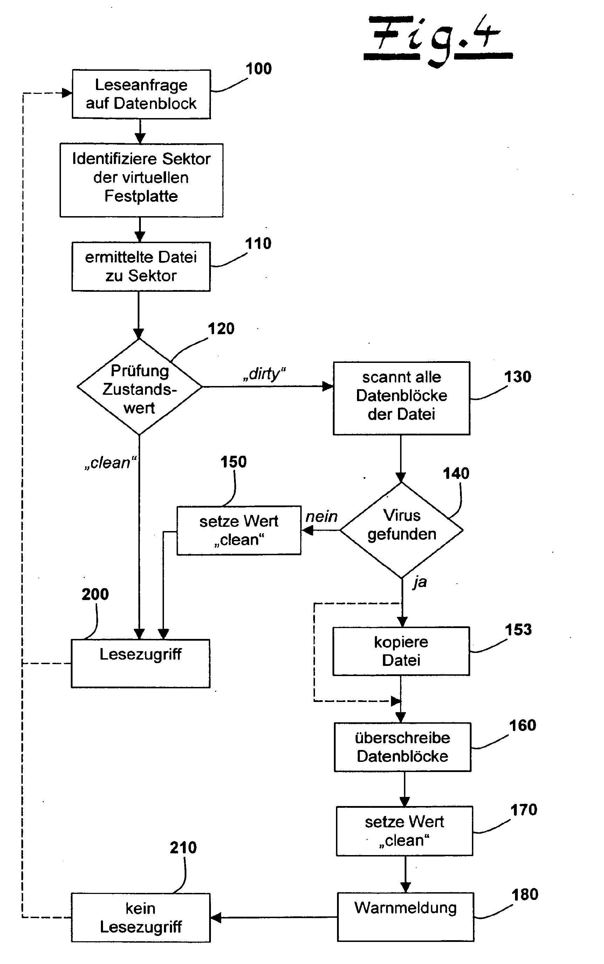

Fig. 4 zeigt in einem Blockdiagramm den Ablauf des erfindungsgemäßen Verfahrens bei der Überwachung des Lesezugriffs des Nutzerbetriebssystems N. Eine Leseanfrage 100 des Nutzerbetriebssystems N auf einen Datenblock in dem virtuellen Massenspeicher wird abgefangen, wobei die zu dem Datenblock zugehörige Datei sowie sämtliche weiteren zu der Datei gehörenden Datenblöcke ermittelt werden 110. Anschließend wird der Zustandswert überprüft, der der Datei zugeordnet ist 120. Falls der Datei der Zustandswert "clean" zugeordnet ist, wird ein Lesezugriff 200 gewährt und die nächste Anfrage 100 des Nutzerbetriebssystems N auf einen Lesezugriff bearbeitet. Falls der Zustandswert der Datei "dirty" ist, scannt die Scan-Engine alle Dateiblöcke der Datei 130. Wenn kein Virus gefunden wird 140, wird der Zustandswert der Datei auf "clean" gesetzt 150 und nachfolgend ein Lesezugriff gewährt 200. Falls festgestellt wird, dass die Datei schadhaft ist, werden die zugeordneten Datenblöcke überschrieben 160, wobei zuvor optional ein Kopieren 153 der Datei in einem ersten Speicherbereich des Sicherheitsbetriebssystems vorgesehen sein kann. Nach dem Überschreiben 160 der Datenblöcke der Datei wird der zugeordnete Zustandswert auf clean gesetzt 170 und eine Warnmeldung an den Benutzer oder einen Administrator veranlasst 180. Schließlich wird der Lesezugriff endgültig verweigert 210, bevor die nächste Anfrage 100 des Nutzerbetriebssystems N auf einen Lesezugriff bearbeitet wird.

## Patentansprüche

1. Verfahren zur sicheren Datenverarbeitung auf einem Computersystem mit einem für einen Benutzer nicht sichtbaren, über- oder nebengeordneten Sicherheitsbetriebssystem,
wobei das Sicherheitsbetriebssystem als Computerprogrammanwendung eine virtuelle Maschine (VM) mit virtueller Computerhardware bereitstellt, auf der ein für den Benutzer sichtbares und benutzbares Nutzerbetriebssystem ausführbar ist und die zumindest einen virtuellen Massenspeicher mit einem Dateisystem des Nutzerbetriebssystems aufweist oder wobei das Sicherheitsbetriebssystem gekapselt in einer ersten virtuellen Maschine und das für den Benutzer sichtbare und benutzbare und mit zumindest einem virtuellen Massenspeicher mit einem Dateisystem ausgestattete Nutzerbetriebssystem in einer zweiten virtuellen Maschine ausgeführt wird,
wobei das Sicherheitsbetriebssystem aus dem Nutzerbetriebssystem durch den Benutzer oder eine Computerprogrammanwendung, insbesondere ein Schadprogramm (Malware), nicht manipulierbar ist,
wobei das Dateisystem des Nutzerbetriebssystems eingelesen und einem auf dem Sicherheitsbetriebsystem ausgeführten Analyseprozess bereitgestellt wird,
wobei ein Lesezugriff des Nutzerbetriebssystems auf einen Datenblock in dem virtuellen Massenspeicher (Sektor) abgefangen und an den Analyseprozess übergeben wird, der den Datenblock einer Datei zuordnet und sämtliche zu der Datei gehörenden Datenblöcke ermittelt und
wobei der Analyseprozess einen in dem Sicherheitsbetriebssystem ausgeführten Prüfprozess (Scan-Engine) zur Erkennung von schadhaften Dateien steuert.

2. Verfahren nach Anspruch 1, wobei eine Datenstruktur erstellt wird, welche die Sektoren des virtuellen Massenspeichers mit den darin liegenden Dateien und welche jede Datei mit einer Zustandsvariablen verknüpft.

3. Verfahren nach Anspruch 2, wobei Dateien in dem virtuellen Massenspeicher, die von dem Prüfprozess zur Erkennung von schadhaften Dateien überprüft und als unschädlich erkannt wurden, mit einem ersten Zustandswert (clean) und Dateien, die noch nicht überprüft oder die von dem Nutzerbetriebssystem verändert wurden, mit einem zweiten Zustandswert (dirty) versehen werden.

4. Verfahren nach einem der Ansprüche 1 bis 3, wobei eine Datei, die von dem Prüfprozess als schadhafte Datei identifiziert wird, in einen gesicherten Speicherbereich des Sicherheitsbetriebssystems kopiert wird.

5. Verfahren nach einem der Ansprüche 1 bis 4, wobei eine Datei, die von dem Prüfprozess als schadhafte Datei identifiziert wird, überschrieben und so unbrauchbar gemacht wird und wobei ein Lesezugriff des Nutzerbetriebssystems auf diese Datei verweigert wird.

6. Verfahren nach einem der Ansprüche 1 bis 5, wobei das Sicherheitsbetriebssystem ein Abbild (Speicherabbild) der virtuellen Festplatte erstellt.

7. Verfahren nach Anspruch 6, wobei im nichtaktiven Zustand des Nutzerbetriebssystems die virtuelle Festplatte von dem Prüfprozess überprüft wird.

8. Verfahren nach Anspruch 6, wobei während des Betriebs des Nutzerbetriebssystems das Abbild der virtuellen Festplatte von dem Prüfprozess überprüft wird.

9. Verfahren nach Anspruch 7 oder 8, wobei eine schadhafte Datei der virtuellen Festplatte oder des Abbildes der virtuellen Festplatte durch eine entsprechende unbeschädigte Datei ersetzt wird.

10. Verfahren nach Anspruch 7 oder 8, wobei eine schadhafte Datei der virtuellen Festplatte oder des Abbildes der virtuellen Festplatte durch Überschreiben zunächst unbrauchbar gemacht und nachfolgend manuell durch eine entsprechend unbeschädigte Datei ersetzt wird.
